# EUROPÄISCHE PATENTSCHRIFT

(11) **EP 3 593 302 B1**
(45) Veröffentlichungstag und Bekanntmachung des Hinweises auf die Patenterteilung: **17.12.2025**
(21) Anmeldenummer: 18710404.7
(22) Anmeldetag: 06.03.2018
(51) Int. Cl.: G06Q 10/0639, G06Q 50/04

(54) **SYSTEM UND VERFAHREN ZUM BESTIMMEN VON FEHLERBILDERN AUS SENSORDATEN IN PRODUKTVALIDIERUNGS- UND FERTIGUNGSPROZESSEN**
SYSTEM AND METHOD FOR DETERMINING FAULT PATTERNS FROM SENSOR DATA IN PRODUCT VALIDATION AND MANUFACTURING PROCESSES
SYSTÈME ET PROCÉDÉ DE DÉTERMINATION D'IMAGES DE DÉFAUT À PARTIR DE DONNÉES DE CAPTEUR DANS DES PROCESSUS DE VALIDATION DE PRODUIT ET DE FABRICATION

(30) Priorität: 08.03.2017 DE 102017104884
(43) Veröffentlichungstag der Anmeldung: 15.01.2020
(73) Patentinhaber: Mts Consulting & Engineering GmbH, 82256 Fürstenfeldbruck (DE)
(72) Erfinder: THURNER, Frank, 82256 Fürstenfeldbruck (DE)
(74) Vertreter: 2s-ip Schramm Schneider Bertagnoll Patent- und Rechtsanwälte Part mbB
(86) Internationale Anmeldenummer: PCT/EP2018/055473
(87) Internationale Veröffentlichungsnummer: WO 2018/162481

(56) Entgegenhaltungen:
- WO-A2-01/69329
- JP-B2- 4 693 225

## Beschreibung

### Gebiet der Erfindung

Die Erfindung betrifft ein Verfahren zur Bestimmung von Fehlerbildern von in zumindest einem Prozess auftretenden Fehlern und zur Überwachung eines Prozesses (eines zumindest einen Prozessschritt umfassenden Fertigungsprozesses oder eines Produktvalidierungsprozesses / einer Produktvalidierung), jeweils basierend auf 2-bis n-dimensionalen Sensordaten. Des Weiteren betrifft die Erfindung ein für die Ausführung des erfindungsgemäßen Verfahrens ausgestaltetes System.

### Hintergrund der Erfindung

Bei der Herstellung von Gütern, etwa Fahrzeugen, kann die Qualität der Güter und des Produktions- bzw. Fertigungsprozesses erhöht werden, wenn Fehler im Produktions- bzw. Fertigungsprozess einer bestimmten Fehlerursache zugeordnet werden können. Ein Produktions- bzw. Fertigungsprozess umfasst hierbei die Herstellung, Montage und/oder Inbetriebnahme jeweils einzelner Komponenten, etwa das Herstellen einer Schraubverbindung zwischen zwei Bauteilen eines Fahrzeuges. Die Anzahl der möglichen Fehlerbilder kann hierbei je nach dem herzustellenden Gut immens sein - bei Fahrzeugen kann sie im vier- oder fünfstelligen Bereich liegen. In der Summe kann sich eine hohe Anzahl an Fehlern ansammeln, die durchaus im Bereich von einigen hundert Fehlern liegen kann.

In der Praxis ist es schwierig, einen bestimmten Fehler bzw. ein Fehlerbild nicht nur zu detektieren, sondern den Fehler auch einer Fehlerursache zuzuordnen. Meist ist es daher nicht möglich, den Produktions- bzw. Fertigungsprozess zu verbessern, also den Produktions- bzw. Fertigungsprozess oder das Produkt weniger fehleranfällig auszuführen bzw. einen nahezu fehlerfreien Produktions- bzw. Fertigungsprozess zu erreichen.

Die Schwierigkeit, eine Fehlerursache zu bestimmen, wird auch durch den Umstand erhöht, dass bestimmte Fehler unterschiedliche Ursachen haben können. So kann ein bestimmter Fehler in einem Fall aufgrund einer ersten Fehlerursache entstanden sein und in einem anderen Fall aufgrund einer zweiten Fehlerursache. Der Fehler bzw. Fehlercode allein liefert daher meist nur unzureichende Informationen, um eine Fehlerursache zu bestimmen und ausräumen zu können.

### Aufgabe der Erfindung

Aufgabe der Erfindung ist es, die voranstehend genannten Nachteile zumindest teilweise zu beheben. Insbesondere ist es Aufgabe der Erfindung, eine präzise Detektion und Lokalisierung von Fehlerbildern und Fehlerursachen in Produktvalidierungs- und Produktions- bzw. Fertigungsprozessen und damit ein qualitativ hochwertige Produkte und nahezu fehlerfreie Produktions- bzw. Fertigungsprozesse zu ermöglichen. Die Erfindung soll hierbei einen signifikanten Beitrag zur Null-Fehler-Strategie in Produkten und Produktions- bzw. Fertigungsprozessen liefern.

### Erfindungsgemäße Lösung

Zumindest eine der voranstehenden Aufgaben wird gelöst durch ein Verfahren und ein System nach den unabhängigen Ansprüchen. Weitere Merkmale und Details der Erfindung sowie vorteilhafte Ausgestaltungen und Weiterbildungen ergeben sich aus den jeweiligen abhängigen Ansprüchen, der Beschreibung und der Zeichnung. Dabei gelten Merkmale und Details, die im Zusammenhang mit dem erfindungsgemäßen Verfahren beschrieben sind, auch im Zusammenhang mit dem erfindungsgemäßen System und umgekehrt, sodass bezüglich der Offenbarung zu den einzelnen Erfindungsaspekten stets wechselseitig Bezug genommen werden kann.

Bereitgestellt wird demnach ein Verfahren zur Überwachung zumindest eines Prozesses und zur Bestimmung von Fehlerbildern von in dem zumindest einen Prozess auftretenden Fehlern, wobei für eine Anzahl von Teilprozessen des zumindest einen Prozesses eine Parametertabelle mit charakteristischen Fehlerbildern erzeugt wird, wobei das Erzeugen der Parametertabelle basierend auf historischen Sensordaten erfolgt, wobei die historischen Sensordaten eine Anzahl von historischen Kurven beschreiben, die zumindest zwei Dimensionen aufweisen und jeweils einem Teilprozess zugeordnet sind, und wobei die historischen Kurven für jeden Teilprozess historische iO-Kurven (in Ordnung) und historische niO-Kurven (nicht in Ordnung) umfassen, wobei die historischen niO-Kurven fehlerhafte Teilprozesse repräsentieren.

Besonders vorteilhaft ist es hierbei, wenn
- der zumindest eine Prozess einen Fertigungsprozess und einen Produktvalidierungsprozess / eine Produktvalidierung umfasst, und
- die Teilprozesse Prozessschritte des Fertigungsprozesses und Produktvalidierungsschritte des Produktvalidierungsprozess / der Produktvalidierung umfassen, und
- die historischen Kurven historische Prozesskurven und historische Produktvalidierungskurven umfassen, die historischen iO-Kurven historische iO-Prozess-kurven und historische iO-Produktvalidierungskurven umfassen, und die historischen niO-Kurven historische niO-Prozesskurven und historische niO-Produktvalidierungskurven umfassen, und
- die fehlerhaften Teilprozesse fehlerhafte Prozessschritte und fehlerhafte Produkte umfassen.

Vorteilhaft ist es zudem, wenn das Erzeugen der Parametertabelle für jeden Teilprozess umfasst:
- Auswählen der historischen niO-Kurven aus den historischen Kurven; und
- für jede ausgewählte historische niO-Kurve und in Abhängigkeit von der Art des Teilprozesses:
   - Einteilen der historischen niO-Kurve in eine Anzahl von Abschnitten oder in eine Anzahl von Quadranten;
   - Ermitteln einer Anzahl von Parameterwerten für jeden Abschnitt / jeden Quadranten, wobei die für die Art des Teilprozesses relevanten Parameter in einer Konfigurationstabelle hinterlegt sind;
   - Durchführen eines Zuordnungsschrittes, in dem der historischen niO-Kurve ein Fehlerbild zugeordnet wird, wobei das Fehlerbild ausgewählt wird aus einer Menge von für die Art des Teilprozesses relevanten Fehlerbildern, die in der Konfigurationstabelle hinterlegt sind, und wobei ein Fehlerbild vorzugsweise mehreren historischen niO-Kurven zugeordnet wird.

Das Erzeugen der Parametertabelle kann nach dem Zuordnen der Fehlerbilder zu den historischen niO-Kurven weiter umfassen:
- für jedes Fehlerbild, Ermitteln einer charakteristischen Verteilung für die zu dem jeweiligen Fehlerbild gehörenden Parameter (Parameter-Populationen);
- aus allen Fehlerbildern, Ermitteln jener Fehlerbilder, die anhand einer einzigen Parameter-Population eineindeutig bestimmbar sind, wobei sich diese eine Parameter-Population mit keiner weiteren Parameter-Population der Fehlerbilder überlappt; und
- Einfügen der ermittelten eineindeutig bestimmbaren Fehlerbilder in die Parametertabelle, wobei nur jene Werte der Parameter-Population, mit der das Fehlerbild eineindeutig bestimmbar ist, für das jeweilige Fehlerbild als Merkmal in der Parametertabelle gespeichert werden.

Vorteilhaft ist es, wenn für jene Fehlerbilder, die nicht anhand einer einzigen Parameter-Population eineindeutig bestimmbar sind, folgende Schritte durchgeführt werden:
i) Verkleinern der Intervall-Längen der Parameter-Populationen um einen vorbestimmten relativen oder absoluten Wert;
ii) Ermitteln jener Fehlerbilder, die anhand einer Parameter-Population mit verkleinerten Intervall-Längen eineindeutig bestimmbar sind und Einfügen der ermittelten eineindeutig bestimmbaren Fehlerbilder am Ende der Parametertabelle, wobei die Werte der Parameter-Populationen mit den ursprünglichen Intervall-Längen als Merkmale in der Parametertabelle gespeichert werden; und
iii) Prüfen, ob noch Fehlerbilder vorhanden sind, die nicht in die Parametertabelle eingefügt wurden, und falls diese Prüfung positiv ist, Fortfahren mit dem Schritt i), solange, bis alle Fehlerbilder in die Parametertabelle eingefügt wurden.

Die in der Parametertabelle gespeicherten Merkmale können vor dem Speichern um einen vorbestimmten relativen oder absoluten Wert angepasst werden, insbesondere die Intervallgrenzen um einen vorbestimmten relativen Wert vergrößert werden. Damit können Schwankungen beim Detektieren von Fehlerbildern ausgeglichen werden.

Nach dem Einfügen aller Fehlerbilder in die Parametertabelle kann ein Überprüfungsschritt durchgeführt werden, wobei der Überprüfungsschritt umfasst:
i) für jede historische niO-Kurve, auf dessen Basis die Parametertabelle erzeugt wurde, Ermitteln eines dazugehörigen Fehlerbildes auf Basis der Parametertabelle, indem jenes Fehlerbild ausgewählt wird, dessen Merkmale in der Parametertabelle mit den Merkmalen der historischen niO-Kurve übereinstimmen, wobei die in der Parametertabelle gespeicherten Fehlerbilder in aufsteigender Reihenfolge mit den Merkmalen der historischen niO-Kurve verglichen werden und wobei der Vergleich beendet wird, sobald ein Fehlerbild ermittelt wurde;
ii) für jede historische niO-Kurve aus dem Schritt i), Überprüfen, ob das ermittelte Fehlerbild mit dem der historischen niO-Kurve in dem Zuordnungsschritt zugeordneten Fehlerbild übereinstimmt; und
iii) wenn für ein Fehlerbild in dem Schritt ii) eine bestimmte Anzahl von ermittelten Fehlerbildern nicht mit den zugeordneten Fehlerbildern übereinstimmt,
   - Speichern der Anzahl zu dem Fehlerbild in der Parametertabelle;
   - Erzeugen zumindest eines zusätzlichen Merkmals und Speichern des zusätzlichen Merkmals zusammen mit den Merkmalen des Fehlerbildes als neues Fehlerbild in der Parametertabelle; und
   - Ausführen der Schritte gemäß Anspruch 4 für jene Fehlerbilder, die das zumindest eine zusätzliche Merkmal aufweisen.

Für Fehlerbilder, die auch mit dem zusätzlichen Merkmal nicht eineindeutig bestimmbar sind, ist es vorteilhaft eine binär logistische Regression durchzuführen, wobei für diese Fehlerbilder die Formel der binär logistischen Regression zu dem Fehlerbild in der Parametertabelle gespeichert wird und wobei anschließend der Überprüfungsschritt wiederholt wird.

In der Parametertabelle können jene Fehlerbilder gekennzeichnet werden, zu denen in dem Überprüfungsschritt die jeweils kleinste Anzahl gespeichert wurde.

Die historischen Sensordaten können von Sensoren bereitgestellt werden. Diese Sensoren können einer Fertigungsanlage, einem Werkzeug, einem Prüfgeräte und/oder einer Produktvalidierungseinrichtung zugeordnet sein.

Nach dem Erzeugen der Parametertabelle können folgende Schritte durchgeführt werden:
a) Erheben von Sensordaten, die während eines Teilprozesses von Sensoren bereitgestellt werden, wobei die erhobenen Sensordaten zumindest eine Kurve beschreiben, die zumindest zwei Dimensionen aufweist, und wobei die erhobenen Sensordaten dem Teilprozess zugeordnet werden;
b) Vergleichen der erhobenen Sensordaten mit in der Parametertabelle für diesen Teilprozess hinterlegten charakteristischen Fehlerbildern, wobei für den Vergleich aus den erhobenen Sensordaten entsprechend den Merkmalen, die die charakteristischen Fehlerbilder dieses Teilprozesses beschreiben, Ist-Merkmale extrahiert werden, die gemäß einer Vergleichsvorschrift mit den Merkmalen in der Parametertabelle verglichen werden; und
c) Auswählen jenes Fehlerbildes aus der Parametertabelle, dessen Merkmale einen vorbestimmten Übereinstimmungsgrad zu den Ist-Merkmalen aufweisen.

Bei dem vorbestimmten Übereinstimmungsgrad ist es optional vorgesehen, wenn jedes Ist-Merkmal und das entsprechende Merkmal des Fehlerbildes ein vorbestimmtes Übereinstimmungskriterium erfüllen.

Nach dem Schritt c) kann für das ausgewählte Fehlerbild zumindest eine dem Fehlerbild zugeordnete Fehlerursache und/oder zumindest eine dem Fehlerbild zugeordnete Fehlerbeseitigungsmaßnahme ausgewählt werden, wobei die Fehlerursachen und/oder die Fehlerbeseitigungsmaßnahmen und die Zuordnung zu dem jeweiligen Fehlerbild in einer Tabelle gespeichert sind.

Bereit gestellt wird des Weiteren ein System, welches angepasst ist, das erfindungsgemäße Verfahren auszuführen, insbesondere ein Computersystem mit einer Speichereinrichtung, in der die Parametertabelle gespeichert ist bzw. wird, und einer Schnittstelle zum Entgegennehmen von Sensordate, in denen Fehlerbilder detektiert werden sollen.

### Kurzbeschreibung der Figuren

Weitere Einzelheiten und Merkmale der Erfindung ergeben sich aus der nachfolgenden Beschreibung in Verbindung mit der Zeichnung, wobei die Erfindung nicht auf die nachfolgend beschriebenen Ausführungsbeispiele beschränkt ist. Es zeigt:
- Fig. 1: Flussdiagramm des erfindungsgemäßen Verfahrens
- Fig. 2: eine Schar von Prozesskurven, die eine Anzahl von historischen niO-Prozesskurven und eine Anzahl von historischen iO-Prozesskurven umfasst;
- Fig. 3: ein konkretes Beispiel einer historischen iO-Prozesskurve und einer historischen niO-Prozesskurve (eingeteilt in Quadranten); und
- Fig. 4: eine beispielhafte Verteilung der Werte eines Parameters für mehrere Fehlerbilder.

### Detaillierte Beschreibung der Erfindung

Mit dem erfindungsgemäßen Verfahren bzw. mit dem erfindungsgemäßen System wird es ermöglicht, nahezu fehlerfreie und robuste Produkte und Prozesse, insbesondere Fertigungsprozesse zu erreichen. Das erfindungsgemäße Verfahren und das erfindungsgemäße System liefern hierbei einen signifikanten Beitrag zur Null-Fehler-Strategie und zur Produkt- und Prozessoptimierung mittels digitaler Vernetzung der Prozesse in Produktion und Montage.

Beispielhafte Anwendungsmöglichkeiten des erfindungsgemäßen Verfahrens sind
- das Unterscheiden von iO-Fällen (in Ordnung) und niO-Fällen (nicht in Ordnung), etwa das Unterscheiden von fehlerhaften und nicht fehlerhaften Produkten oder von fehlerhaften und nicht fehlerhaften Prozessen, auf Basis von Prozess- und/oder Produktvalidierungskurven oder auf Basis von stetigen Merkmalen, beispielsweise Online während eines Fertigungsprozesses, und/oder
- das Erkennen von Fehlerbildern aus niO-Kurven, etwa aus niO-Prozess- und/oder Produktvalidierungskurven, um auf Basis der Fehlerbilder konkrete Fehlerbeseitigungsmaßnahmen einleiten zu können.

Mit dem erfindungsgemäßen Verfahren / System können so Fehlerbilder aus Produktvalidierungs- und Prozess-Kurven erkannt werden, Wirkzusammenhänge und Ursachen je Fehlerbild ermittelt werden und Lösungen und Maßnahmen je Fehlerursache angeboten bzw. bereitgestellt werden. Werden die Fehlerbilder etwa direkt während eines Fertigungsprozesses erkannt, so können noch im Fertigungsprozess Maßnahmen zur Behebung der Fehler eingeleitet und durchgeführt werden.

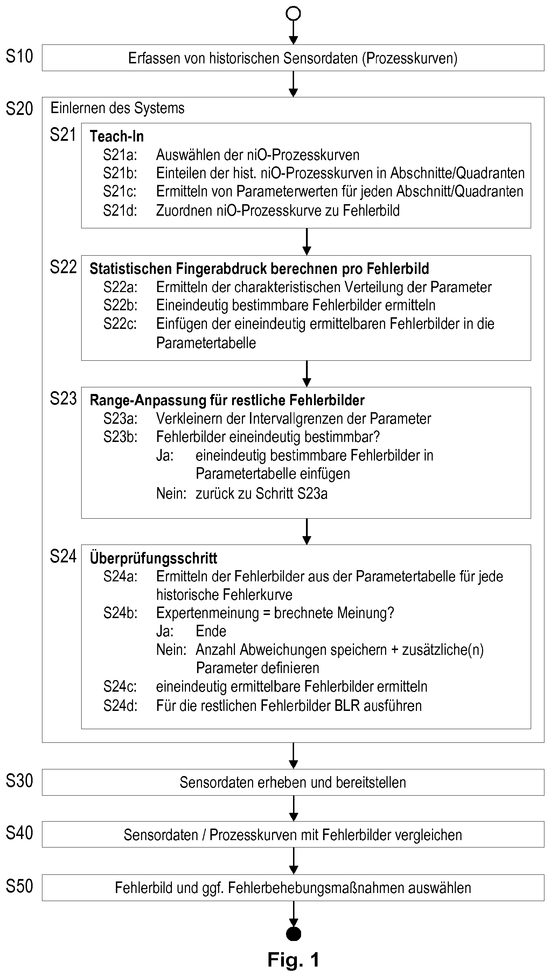

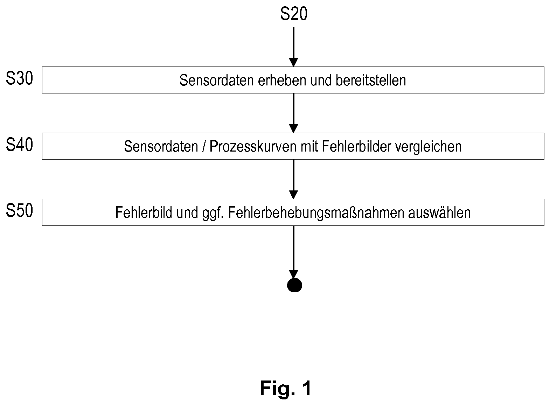

**Fig. 1** zeigt ein Ablaufdiagramm eines erfindungsgemäßen Verfahrens.

Erfindungsgemäß ist es vorgesehen, ein System, mit dem eine Überwachung von Produktvalidierungs- und/oder Prozessschritten eines Fertigungsprozesses durchgeführt werden soll bzw. mit dem Fehlerbilder fehlerhafter Produkte und/oder Prozessschritte bestimmt werden sollen, zunächst "einzulernen". Auf Basis der "gelernten" Information kann das System anschließend die Produktqualität bzw. Produktfunktionalität und/oder einen Fertigungsprozess überwachen und vorzugsweise online, d.h. beispielsweise während des Produktvalidierungs- und/oder Fertigungsprozesses, fehlerhafte Produkte und/oder Prozessschritte und deren möglichen Ursachen erkennen und aufgrund der ermittelten Fehlerbilder Lösungen und Maßnahmen für die Fehlerbeseitigung vorschlagen.

Nachfolgend umfasst der Begriff "Prozessschritt" sowohl Produktvalidierungsschritte und/oder Prozessschritte eines Fertigungsprozesses. Diese Prozessschritte werden auch als Teilprozesse bezeichnet. Der Begriff "Fertigungsprozess" umfasst auch Produktvalidierungsprozesse. Der Begriff Prozesskurven umfasst auch Produktvalidierungskurven.

Das nachfolgend mit Bezug auf Prozesse, Prozessschritte und Prozesskurven beschriebene Verfahren lässt sich daher erfindungsgemäß auch auf Produktvalidierungen, Produktvalidierungsprozesse bzw. Produktvalidierungskurven anwenden.

In einem ersten Schritt S10 ist es hierzu vorgesehen, Sensordaten zu erfassen, anhand derer in einem weiteren Schritt S20 das "Einlernen" des Systems durchgeführt wird. Die Sensordaten können hierbei Prozesskurven eines bestimmten Prozesses bzw. Prozessschrittes beschreiben, d.h. die Sensordaten werden vorzugsweise als n-Tupel (n >= 1) erfasst.

Bereitgestellt werden die Sensordaten von Sensoren, die beispielsweise eine bestimmte Fertigungseinrichtung oder ein bestimmtes Werkzeug überwachen. So kann etwa ein elektrischer Drehmomentschrauber einen Drehmomentsensor und einen Winkelsensor aufweisen, mit denen das Drehmoment und der Drehwinkel während eines Schraubvorganges erfasst werden können. Aus den erfassten Drehmomenten und Drehwinkeln (2-Tupel) kann eine Prozesskurve erzeugt werden, die das Drehmoment in Abhängigkeit vom Drehwinkel angibt.

Sensoren für weitere physikalische Parameter können vorgesehen werden. So kann beispielsweise ein Zeitgeber vorgesehen sein, der zusätzlich zum Drehmoment und zum Drehwinkel auch die Schraubzeiten (z.B. in Millisekunden) erfasst. Aus den erfassten Drehmomenten, Drehwinkeln und Schraubzeiten (3-Tupel) kann wiederum eine Prozesskurve (hier dreidimensionale Prozesskurve) erzeugt werden, die beispielsweise das Drehmoment in Abhängigkeit vom Drehwinkel oder das Drehmoment in Abhängigkeit von der Schraubzeit angibt.

Anstelle von Kurvenverläufen können auch stetige Merkmale für eine Prozess- und/oder Produktvalidierung vorgesehen werden.

Diese für das Einlernen des Systems erfassten Sensordaten bzw. die daraus abgeleiteten Prozesskurven werden nachfolgend "historische Sensordaten" bzw. "historische Prozesskurven" genannt. Die historischen Sensordaten werden in einer Speichereinrichtung des Systems abgelegt. Die historischen Sensordaten bzw. die historischen Prozesskurven können je nach Art des Prozesses über einen bestimmten Zeitraum erfasst werden, um eine ausreichend große Datenbasis für das Einlernen zur Verfügung zu haben.

Werden historische Sensordaten für unterschiedliche Prozesse bzw. Prozessschritte erfasst, werden die historischen Sensordaten in der Speichereinrichtung dem jeweiligen Prozess bzw. Prozessschritt zugeordnet. Um während der Überwachung auch fehlerhafte Prozessschritte erkennen zu können ist es vorteilhaft, wenn die zu einem Prozess bzw. Prozessschritt gehörenden historischen Prozesskurven neben iO-Prozesskurven auch eine Mindestanzahl (beispielsweise mindestens sechs) von niO-Prozesskurven umfasst. Die niO-Prozesskurven repräsentieren hierbei fehlerhafte Prozessschritte bzw. fehlerhafte Produkte oder Produktfunktionen.

Die nachfolgend genannten Schritte S21 bis S24 werden im Rahmen des Schrittes S20 durchgeführt bzw. sind Unterschritte des Schrittes S20.

Die Schritt S21a bis S21d werden als "Teach-In" S21 bezeichnet.

Die Schritte S22a bis S22c werden als "Fingerabdruckberechnung" S22 bezeichnet.

Die Schritte S23a bis S23b werden als "Range-Anpassung" S23 bezeichnet.

Die Schritte S24a bis S24d werden als "Überprüfungsschritt" S24 bezeichnet.

Zunächst wird eine Parametertabelle erzeugt und in der Speichereinrichtung des erfindungsgemäßen Systems gespeichert. Die Parametertabelle enthält nach dem Einlernen des Systems eine Anzahl von charakteristischen Fehlerbildern für eine Anzahl von verschiedenen Prozessen bzw. Prozessschritten.

Hierzu werden zunächst in einem Schritt S21a für jeden einzulernenden Prozess die niO-Prozesskurven aus den entsprechenden historischen Prozesskurven (die niO- und iO-Prozesskurven aufweisen) ausgewählt.

Die Auswahl der niO-Prozesskurven kann durch einen Benutzer, etwa mittels einer hierfür geeigneten Eingabe-/Auswahlmaske erfolgen. Hierbei sollte die Anzahl der ausgewählten niO-Prozesskurven eine gewisse Größenordnung erreichen, damit sichergestellt ist, dass für jedes zu "lernende" Fehlerbild ein gewisser Stichprobenumfang an niO-Fällen vorhanden ist.

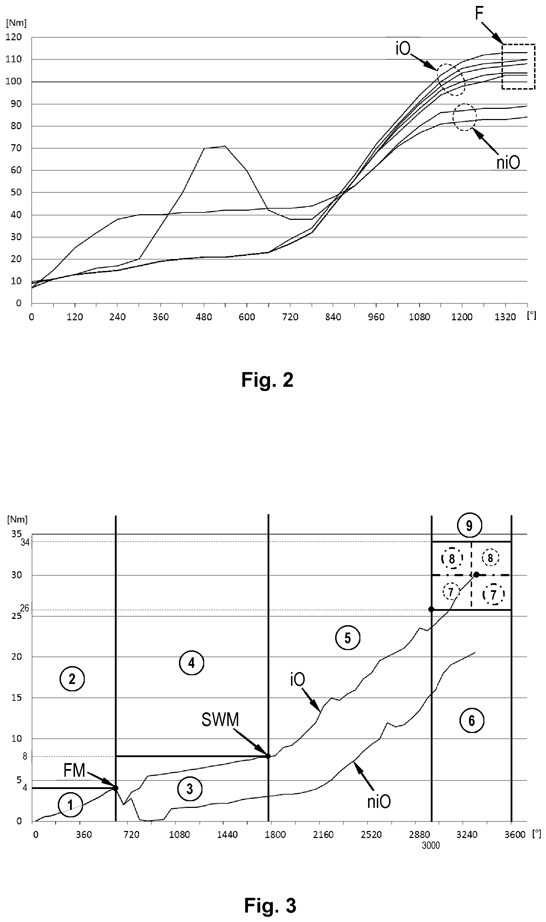

Ein Beispiel für eine Schar von historischen Prozesskurven, die eine Anzahl von niO-Prozesskurven und eine Anzahl von iO-Prozesskurven umfasst, ist in **Fig. 2** gezeigt. Gezeigt sind hier die Drehmomentverläufe in Abhängigkeit des Drehwinkels bei einem Einschraubvorgang. Die niO-Prozesskurven sind hierbei jene Kurven, die außerhalb eines vorbestimmten Sollbereichs enden, wobei der Sollbereich hier durch das Fenster F repräsentiert wird. Das Fenster F wird hier durch ein bestimmtes Drehwinkelintervall und durch ein bestimmtes Drehmomentintervall definiert.

Im Anschluss an die Auswahl der historischen niO-Prozesskurven werden diese (einzeln oder zusammen) im Schritt S21b in Abschnitte oder Quadranten eingeteilt. Eine in Quadranten eingeteilte historische niO-Prozesskurve ist in **Fig. 3** gezeigt, wobei dort auch eine historische iO-Prozesskurve gezeigt ist. Bei dem in Fig. 3 gezeigten Beispiel ist die niO-Prozesskurve in insgesamt 9 Quadranten eingeteilt.

Das Einteilen der historischen niO-Prozesskurven in Quadranten bzw. Abschnitte kann hierbei auf zwei Arten erfolgen:
1. Basierend auf verschiedenen Einstellparametern der Werkzeuge oder Maschinen, dessen Sensoren die Sensordaten für die jeweilige historische Prozesskurve erzeugen und bereitstellen, können die Abschnitte bzw. Quadranten automatisch festgelegt werden. Bei einem Schraubvorgang können hierzu beispielsweise das Findemoment, das Schwellmoment, das Sollmoment, weitere Drehmomente, und die jeweiligen Winkel bzw. Drehwinkel herangezogen werden. Bei dem in Fig. 3 gezeigten Beispiel sind beispielsweise das Findemoment FM und das Schwellmoment SWM sowie die jeweiligen Drehwinkel als Parameter für das Festlegen der ersten vier Quadranten verwendet worden.
2. Basierend auf Eingaben eines Benutzers. Hierbei kann der Benutzer unter Berücksichtigung bestimmter Parameter oder auch unabhängig von den Parametern die Abschnitte oder Quadranten selbst festlegen.

Nach dem Einteilen der historischen niO-Prozesskurven in Abschnitte / Quadranten werden in einem nächsten Schritt S21c für jeden Abschnitt / Quadranten jeder niO-Prozesskurve eine Anzahl von Parameterwerte ermittelt. Die Parameter, für die die Werte zu ermitteln sind, hängen hierbei einerseits von der Art des Prozessschrittes, der der jeweiligen niO-Prozesskurve zugrunde liegt, und andererseits von dem jeweiligen Abschnitt / Quadranten ab. So können beispielsweise für zwei verschiedene Schraubprozesse oder für zwei verschiedene Quadranten einer niO-Prozesskurve unterschiedliche Parameter vorgesehen sein, dessen Werte bestimmt werden sollen.

Die für jede Art des Prozessschrittes und für jeden Abschnitt / Quadranten relevanten Parameter sind in einer Konfigurationstabelle hinterlegt, die in der Speichereinrichtung des Systems gespeichert sein kann. Die Parameter können statistische Parameter umfassen. Beispiele für solche Parameter je Abschnitt / Quadrant sind:
- Endwert (X), Endwert (Y)
- Max (X), Max (Y)
- Standardabweichung (X), Standardabweichung (Y)
- Mittelwert / Median (X), Mittelwert / Median (Y)
- Steigung Y (bei X von; bis), Krümmung Y (bei X von; bis), etc.

Je nach Art der niO-Prozesskurve und Abschnitt / Quadrant können bestimmte Parameterkombinationen definiert werden.

Die ermittelten Parameterwerte können in der Speichereinrichtung gespeichert werden und der jeweiligen historischen niO-Prozesskurve zugeordnet werden.

Nachdem für die historischen niO-Prozesskurven die Parameterwerte ermittelt worden sind, werden in einem Zuordnungsschritt S21d den historischen niO-Prozess-kurven Fehlerbilder zugeordnet. Vorzugsweise wird jeder historischen niO-Prozesskurve einzeln ein Fehlerbild zugeordnet. Die geschieht vorzugsweise manuell. Zur Unterstützung des Anwenders kann die jeweilige historische niO-Prozesskurve visualisiert werden, wobei vorzugsweise auch die Quadranten- / Abschnittseinteilung und die ermittelten Parameterwerte zur Anzeige gebracht werden. Zusätzlich können jene historischen niO-Prozesskurven mit eingeblendet werden, denen dasselbe Fehlerbild zugeordnet wurde.

Je nach Art der historischen niO-Prozesskurve können unterschiedliche Fehlerbilder zugeordnet werden. Die möglichen zuordenbaren Fehlerbilder werden in einer Konfigurationstabelle gespeichert. So kann beispielsweise das Fehlerbild "zu großer Drehwinkel" einer niO-Prozesskurve zugeordnet werden, die einen Schraubvorgang repräsentiert, nicht aber einer niO-Prozesskurve, die einen Lötvorgang repräsentiert. Selbstverständlich kann ein bestimmtes Fehlerbild mehreren niO-Prozesskurven unterschiedlicher Prozesse oder mehreren niO-Prozesskurven des gleichen Prozesses zugeordnet werden.

Die Zuordnung einer niO-Prozesskurve zu einem Fehlerbild wird in der Speichereinrichtung des Systems gespeichert. Damit ist gleichzeitig auch jedem Fehlerbild eine Anzahl von Parametern zugeordnet.

Fehlerbilder für einen Schraubvorgang (z.B. mit einem elektrischen Drehmomentschrauber) können beispielsweise sein:
- Abrutschen / Durchdrehen des Schraubers
- zu hoher Endwinkel
- zu niedriges Enddrehmoment, etc.

Der in Fig. 3 gezeigten historischen niO-Prozesskurve kann beispielsweise das Fehlerbild "Abrutschen" zugeordnet werden, was etwa dadurch erkennbar ist, dass das Drehmoment bei einem Drehwinkel von etwa 720° plötzlich auf nahezu 0 Nm abfällt.

Nach der Zuordnung der Fehlerbilder zu den historischen niO-Prozesskurven kann für jedes zugeordnete Fehlerbild geprüft werden, ob die Anzahl der historischen niO-Prozesskurven das Kriterium eines repräsentativen Stichprobenumfangs erfüllen. Beispielsweise kann geprüft werden, ob ein Fehlerbild mindestens n (z.B. n ≥ 6) historischen niO-Prozesskurven zugeordnet wurde.

Nach dem Schritt S21d und gegebenenfalls der Prüfung des Stichprobenumfangs ist in dem System eine Anzahl von historischen niO-Prozesskurven mit zugeordneten Fehlerbildern und einem repräsentativen Stichprobenumfang pro Fehlerbild gespeichert. Das "Teach-In" ist damit abgeschlossen Die Zuordnung eines Fehlerbildes zu einer historischen niO-Prozesskurve wird nachfolgend als "Expertenmeinung" bezeichnet.

Als nächstes wird nun in dem Schritt S22 für jedes Fehlerbild, d.h. für die einem Fehlerbild zugeordneten historischen niO-Prozesskurven ein sogenannter statistischer Fingerabdruck berechnet.

Hierzu wird zunächst in einem Schritt S22a für jedes Fehlerbild eine charakteristische Verteilung der in dem Schritt S21c ermittelten Parameterwerte der dem jeweiligen Fehlerbild zugeordneten historischen niO-Prozesskurven ermittelt. Die einem Fehlerbild zugeordneten historischen niO-Prozesskurven werden als Fehlerbild-Population bezeichnet, wobei jeder Parameter einer Fehlerbild-Population (Parameter-Population genannt) eine charakteristische Verteilung aufweist.

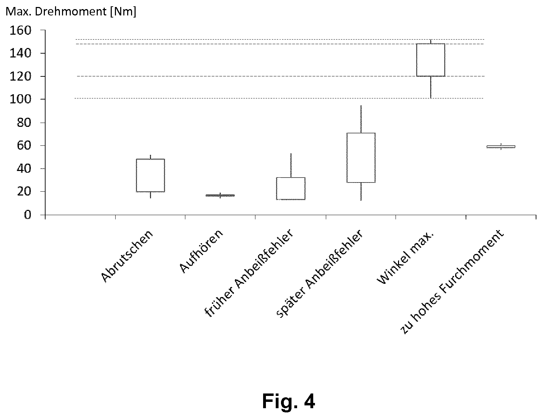

Ein Bespiel für die charakteristische Verteilung in Form von Box-Plots für den Parameter "Max. Drehmoment" und für die Fehlerbilder "Abrutschen", "Aufhören", "früher Anbeißfehler", "später Anbeißfehler", "Winkel max." und "zu hohes Furchmoment" ist in Fig. 4 gezeigt.

Im Anschluss an den Schritt S22a werden in einem Schritt S22b jene Fehlerbilder ermittelt, die anhand eines einzigen Parameters bzw. einer einzigen Parameter-Population eineindeutig bestimmbar sind. Das sind jene Fehlerbilder, die zumindest eine Parameter-Population aufweisen, die sich mit keiner anderen Parameter-Population desselben Parameters aller Fehlerbilder überlappt. Das heißt, ein Fehlerbild, das einen Parameter aufweist, dessen Population sich nicht mit den Populationen desselben Parameters anderer Fehlerbilder überlappt, ist eindeutig hinsichtlich dieses Parameters bestimmbar. Damit dieses Fehlerbild hinsichtlich dieses Parameters auch eineindeutig bestimmbar ist, darf dieser Parameter nicht auch ein weiteres Fehlerbild eindeutig beschreiben.

Bei dem in Fig. 4 gezeigten Beispiel ist das Fehlerbild "Winkel max." durch den Parameter "Max. Drehmoment" eineindeutig bestimmbar, weil sich die Population des Parameters "Max. Drehmoment" des Fehlerbildes "Winkel max." mit keiner anderen Population des Parameters "Max. Drehmoment" der übrigen Fehlerbilder überlappt, während sich die Populationen des Parameters "Max. Drehmoment" bei den übrigen Fehlerbildern überlappen. Für die übrigen in Fig. 4 gezeigten Fehlerbilder wird dann weiter geprüft, ob es andere Parameter gibt, mit denen die Fehlerbilder anhand eines einzigen Parameters eineindeutig bestimmbar sind.

Die in dem Schritt S22b ermittelten eineindeutig bestimmbaren Fehlerbilder werden dann in dem nachfolgenden Schritt S22c an den Anfang der Parametertabelle einsortiert. Hierbei werden für jedes Fehlerbild vorzugsweise nur Werte (z.B. Intervallgrenzen) desjenigen Parameters in der Parametertabelle gespeichert und dem Fehlerbild zugeordnet, mit dem das jeweilige Fehlerbild eineindeutig bestimmbar ist. Bei dem in Fig. 4 gezeigten Beispiel würden demnach für das Fehlerbild "Winkel max." nur die Werte des Parameters "Max. Drehmoment" gespeichert, etwa in der Form "100 <= max. Drehmoment [Nm] <= 152", wenn als Intervallgrenzen die unteren und oberen Visker (Populationsgrenzen) gespeichert werden.

Damit kann bei einer Überwachung eines Fertigungsprozesses für einen Einschraubprozess das Fehlerbild "Winkel max." ermittelt werden, wenn das maximale Drehmoment zwischen 100Nm und 152Nm liegt.

Zusätzlich können auch die Werte der übrigen Parameter zu dem Fehlerbild in der Parametertabelle gespeichert werden, wobei dann jenes Merkmal, welches die eineindeutige Bestimmbarkeit des Fehlerbildes ermöglicht, gesondert ausgezeichnet wird.

Die in der Parametertabelle gespeicherten Parameterwerte können beispielsweise um einen relativen oder absoluten Wert angepasst werden. Beispielsweise können Intervallgrenzen um ± 5% angepasst werden, sodass bei dem vorstehend genannten Beispiel "95 <= max. Drehmoment [Nm] <= 159,6" gespeichert würde. Damit können Schwankung ausgeglichen werden, die aufgrund der Stichprobengröße der Fehlerbild-Population nicht erfasst wurden.

Nachfolgende Tabelle zeigt einen Ausschnitt der Parametertabelle für das in Fig. 4 gezeigte Fehlerbild "Winkel max", wobei die Intervallgrenzen hier bereits angepasst sind.

Weil der Parameter "max. Drehmoment [Nm]" die eineindeutige Bestimmbarkeit des Fehlerbildes "Winkel max." ermöglicht, werden auch nur diese Werte in der Parametertabelle gespeichert. Die Werte der übrigen Parameter bleiben leer.

| Parameter | Min-Wert | Max-Wert |
|---|---|---|
| Winkel [°] | -- | -- |
| Standardabweichung | -- | -- |
| max. Drehmoment [Nm] | 95 | 159,6 |
| Anfangsdrehmoment [Nm] | -- | -- |
| Enddrehmoment [Nm] | -- | -- |

Sind mehrere Parameter für eine eineindeutige Bestimmbarkeit eines Fehlerbildes notwendig, werden für jeden dieser mehreren Parameter die entsprechenden Werte in der Parametertabelle gespeichert. Zudem kann in der Parametertabelle gespeichert werden, wie die Werte der einzelnen Parameter logisch (UND / ODER, XOR, ...) zu verknüpfen sind.

Jene (die restlichen) Fehlerbilder, die nicht anhand eines einzigen Parameters bzw. anhand einer einzigen Parameterpopulation bestimmbar sind, werden in einem nachfolgenden Schritt S23, der "Range-Anpassung" genannt wird, nachbearbeitet, um nach Möglichkeit auch für diese Fehlerbilder eine eineindeutige Bestimmbarkeit zu erreichen.

Hierbei werden zunächst in dem Schritt S23a die Intervalllängen (z.B. die unteren und oberen Visker (Populationsgrenzen)) aller Parameter der restlichen Fehlerbilder um einen vorbestimmten relativen oder absoluten Wert verkleinert.

Anschließend wird in einem Schritt S23b geprüft, ob es unter den restlichen Fehlerbildern nunmehr ein (oder mehrere) Fehlerbilder gibt, die anhand eines einzigen Parameters eineindeutig bestimmbar sind.

| | |
|---|---|
| Falls ja: | Das bzw. die nunmehr eineindeutig bestimmbaren Fehlerbild(er) wird / werden analog zu dem Schritt 22c am Ende der Parametertabelle eingefügt, gegebenenfalls mit angepassten Intervallgrenzen der Parameter. |
| Falls nein: | Fortfahren mit der "Range-Anpassung", indem zum Schritt 23a zurückgekehrt wird. |

Die Range-Anpassung wird solange iterativ durchgeführt, bis alle Fehlerbilder anhand eines einzigen Parameters eineindeutig bestimmbar sind und in die Parametertabelle eingefügt wurden.

Mit Abschluss des Schrittes S23 sind in der Parametertabelle nunmehr alle Fehlerbilder bzw. die zu diesen Fehlerbildern gehörigen Parameter als Merkmale der Fehlerbilder zu den in dem Schritt S21a ausgewählten historischen niO-Prozess-kurven gespeichert.

Im Anschluss an den Schritt S23 wird ein Überprüfungsschritt S24 durchgeführt.

Gemäß einer Variante der Erfindung wird der Überprüfungsschritt nur für jene Fehlerbilder durchgeführt, die erst mit Hilfe des Schrittes 23 (Range-Anpassung) in die Parametertabelle einsortiert werden konnten.

Gemäß einer weiteren Variante der Erfindung wird der Überprüfungsschritt für alle Fehlerbilder durchgeführt.

Im Rahmen des Überprüfungsschrittes S24 wird zunächst in dem Schritt S24a auf Basis der zuvor erzeugten Parametertabelle für jede historische niO-Prozesskurve (ggf. mit der vorstehend genannten Einschränkung), die zum Erzeugen der Parametertabelle herangezogen wurde, das dazugehörige Fehlerbild aus der Parametertabelle ermittelt. Das so zu einem historischen niO-Prozessschritt ermittelte Fehlerbild wird als "berechnete Meinung" bezeichnet.

Anschließend wird in einem Schritt S24b für jedes historische niO-Fehlerbild geprüft, ob die Expertenmeinung der berechneten Meinung entspricht oder ob es zwischen den beiden Meinungen Abweichungen gibt. Es wird also geprüft, ob das einer historischen niO-Prozesskurve in dem Schritt S21d zugeordnete Fehlerbild identisch zu jenem Fehlerbild ist, das für diese historische niO-Prozesskurve in dem Schritt S24a ermittelt wurde. Im Idealfall ist für jede historische niO-Prozesskurve das in dem Schritt S21d zugeordnete Fehlerbild identisch zu dem jeweiligen im Schritt S24a ermittelten Fehlerbild.

Die Prüfung in dem Schritt S24b wird pro Fehlerbild durchgeführt. Das heißt, es wird ermittelt, welchen niO-Prozesskurven in dem Schritt S21d das zu prüfende Fehlerbild zugeordnet wurde. Anschließend wird geprüft, welche Fehlerbilder zu diesen historischen niO-Prozesskurven in dem Schritt S24a ermittelt wurden. Ergeben sich hier keine Abweichungen, kann der Schritt S24 für dieses historische Fehlerbild beendet werden.

Ergeben sich hier allerdings für ein Fehlerbild Abweichungen, wenn also in dem Schritt S24a einer historischen niO-Prozesskurve ein anderes Fehlerbild zugeordnet wurde als in dem Schritt S21d, weicht die Expertenmeinung von der berechneten Meinung ab. Die Anzahl der Abweichungen kann dann in der Parametertabelle zu dem jeweiligen Fehlerbild gespeichert werden. Gleichzeitig werden für dieses Fehlerbild ein oder mehrere zusätzliche Parameter definiert. Dieses Fehlerbild (ursprüngliche Parameter und zusätzliche Parameter) wird dann als neues Fehlerbild in der Parametertabelle gespeichert, wobei das in der Parametertabelle bereits vorhandene Fehlerbild auch überschrieben werden kann. Die Definition des / der zusätzlichen Parameter kann vom Nutzer des Systems vorgenommen werden. Die zusätzlichen Parameter können beispielsweise die Verteilung in einem Intervall, die Steigung in einem Intervall, die Krümmung in einem Intervall, etc. sein.

Anschließend wird für jene Fehlerbilder, zu denen zusätzliche Parameter definiert wurden, geprüft (Schritt S24c), ob es Fehlerbilder gibt, die mit einem einzelnen Parameter eineindeutig bestimmbar sind. Für jene Fehlerbilder, für die das der Fall ist, endet der Überprüfungsschritt hier.

Für die noch verbleibenden Fehlerbilder wird in einem nachfolgenden Schritt S24d eine binär logistische Regression (BLR) ausgeführt und die Formel für die binär logistische Regression wird zu dem jeweiligen Fehlerbild gespeichert.

In der Parametertabelle wird für jedes Fehlerbild zusätzlich gespeichert, mit welchem Verfahren das Fehlerbild in die Parametertabelle eingefügt wurde, nämlich
- gemäß der Schritte S22b und S22c, oder
- gemäß des Schrittes S23b (Range-Anpassung), oder
- gemäß des Schrittes S24c (Range-Anpassung + zusätzliche Merkmale), oder
- gemäß des Schrittes S24d (BLR),
wobei auch angegeben wird, welches Verfahren zu den geringsten Abweichungen zwischen Expertenmeinung und berechneter Meinung geführt hat.

Mit Ende des Schrittes S24d endet auch der Schritt S20 und das System kann als eingelernt angesehen werden.

Mit dem für bestimmte Prozesse bzw. Prozessschritte eingelernten System können diese Prozesse bzw. Prozessschritte online, d.h. im laufenden Betrieb und vorzugsweise in Echtzeit überwacht werden, und unmittelbar nach Erkennen eines Fehlers können dem Mitarbeiter entsprechende Fehlerbilder und ggf. auch entsprechende Fehlerbehebungsmaßnahmen mitgeteilt werden.

Hierzu werden in einem Schritt S30 von einem Werkzeug / Maschine oder dergleichen Sensordaten bereitgestellt, die von Sensoren, die dem Werkzeug / Maschine zugeordnet sind, erhoben werden. Beispielsweise können einem elektrischen Drehmomentschrauber ein Drehmomentsensor und ein Winkelsensor zugeordnet sein. Die Sensordaten beschreiben hierbei eine dem Prozess / Prozessschritt zugeordnete Prozesskurve, etwa den Verlauf des Drehmoments über die Zeit oder Verlauf des Drehmoments über den Drehwinkel, etwa während eines Einschraubvorganges.

Die so erhobenen Sensordaten, bzw. die daraus resultierenden Prozesskurven können nunmehr in dem Schritt S40 mit den in der Parametertabelle gespeicherten Fehlerbildern verglichen werden. Entsprechend den Parametern der dem Prozess / Prozessschritt zugeordneten charakteristischen Fehlerbilder, werden die entsprechenden Parameterwerte aus der jeweiligen Prozesskurve extrahiert und mit den Parametern der Fehlerbilder in der Parametertabelle verglichen.

Ist der Vergleich positiv, wird als Ergebnis des Vergleichs in einem Schritt S50 das entsprechende Fehlerbild aus der Parametertabelle ausgewählt und kann dann dem Benutzer zur Verfügung gestellt werden. Aus einer Maßnahmentabelle können zudem zu diesem Fehlerbild zugeordnete Fehlerbehebungsmaßnahmen ausgewählt werden und dem Benutzer ebenfalls zur Verfügung gestellt werden.

Anderenfalls liegt kein Fehler vor oder der Fehler ist noch unbekannt. Im letzteren Fall kann das System für diesen unbekannten Fehler eingelernt werden, sofern eine genügend große Stichprobe entsprechender historischer niO-Prozesskurven vorhanden ist.

Damit wird es möglich, z.B. in einem laufenden Fertigungsprozess nahezu in Echtzeit Fehler bzw. Fehlerbilder zu erkennen. In Echtzeit von z.B. einer Fertigungsanlage bereitgestellte Sensordaten können direkt mit den gespeicherten Fehlerbildern verglichen werden. In bestimmten Fällen kann ein fehlerhafter Prozessschritt bereits vor Beendigung des Prozessschrittes erkannt werden - beispielsweise kann aus dem Verlauf des Drehmoments eines Drehmomentschraubers bereits vor Beendigung des Schraubvorganges ein möglicher Fehler erkannt werden, sodass der Schraubvorgang erst gar nicht beendet werden muss.

## Patentansprüche

1. Verfahren zur Überwachung zumindest eines Prozesses, wobei der zumindest eine Prozess einen Fertigungsprozess und einen Produktvalidierungsprozess / eine Produktvalidierung umfasst, und zur Bestimmung von Fehlerbildern von in dem zumindest einen Prozess auftretenden Fehlern mit einem Computersystem mit einer Speichereinrichtung und einer Schnittstelle zum Entgegennehmen von Sensordaten, wobei für eine Anzahl von Teilprozessen des zumindest einen Prozesses, wobei die Teilprozesse Prozessschritte des Fertigungsprozesses und Produktvalidierungsschritte des Produktvalidierungsprozess / der Produktvalidierung umfassen, eine Parametertabelle mit charakteristischen Fehlerbildern erzeugt wird, wobei die Parametertabelle in der Speichereinrichtung gespeichert wird, wobei das Erzeugen der Parametertabelle basierend auf historischen Sensordaten erfolgt, wobei die historischen Sensordaten von Sensoren bereitgestellt werden, wobei die Sensoren einer Fertigungsanlage, einem Werkzeug, einem Prüfgerät und/oder einer Produktvalidierungseinrichtung zugeordnet sind, wobei die historischen Sensordaten in der Speichereinrichtung abgelegt werden, wobei die historischen Sensordaten eine Anzahl von historischen Kurven beschreiben, die zumindest zwei Dimensionen aufweisen und jeweils einem Teilprozess zugeordnet sind, und wobei die historischen Kurven für jeden Teilprozess historische iO-Kurven (in Ordnung) und historische niO-Kurven (nicht in Ordnung) umfassen, wobei die historischen niO-Kurven fehlerhafte Teilprozesse repräsentieren, wobei nach dem Erzeugen der Parametertabelle der Prozess online, d.h. im laufenden Betrieb und vorzugsweise in Echtzeit überwacht wird und folgende Schritte durchgeführt werden:
a) Erheben von Sensordaten, in denen Fehlerbilder ermittelt werden sollen, über die Schnittstelle, die während eines Teilprozesses von Sensoren bereitgestellt werden, wobei die erhobenen Sensordaten zumindest eine Kurve beschreiben, die zumindest zwei Dimensionen aufweist, und wobei die erhobenen Sensordaten dem Teilprozess zugeordnet werden;
b) Vergleichen der erhobenen Sensordaten mit in der Parametertabelle für diesen Teilprozess hinterlegten charakteristischen Fehlerbildern, wobei für den Vergleich aus den erhobenen Sensordaten entsprechend den Merkmalen, die die charakteristischen Fehlerbilder dieses Teilprozesses beschreiben, Ist-Merkmale extrahiert werden, die gemäß einer Vergleichsvorschrift mit den Merkmalen in der Parametertabelle verglichen werden; und
c) Auswählen jenes Fehlerbildes aus der Parametertabelle, dessen Merkmale einen vorbestimmten Übereinstimmungsgrad zu den Ist-Merkmalen aufweisen,
wobei nach dem Schritt c) für das ausgewählte Fehlerbild zumindest eine dem Fehlerbild zugeordnete Fehlerursache und/oder zumindest eine dem Fehlerbild zugeordnete Fehlerbeseitigungsmaßnahme ausgewählt werden, wobei die Fehlerursachen und/oder die Fehlerbeseitigungsmaßnahmen und die Zuordnung zu dem jeweiligen Fehlerbild in einer Tabelle gespeichert sind.

2. Verfahren nach dem vorhergehenden Anspruch, wobei
- die historischen Kurven historische Prozesskurven und historische Produktvalidierungskurven umfassen, die historischen iO-Kurven historische iO-Prozesskurven und historische iO-Produktvalidierungskurven umfassen, und die historischen niO-Kurven historische niO-Prozesskurven und historische niO-Produktvalidierungskurven umfassen, und
- die fehlerhaften Teilprozesse fehlerhafte Prozessschritte und fehlerhafte Produkte umfassen.

3. Verfahren nach einem der vorhergehenden Ansprüche, wobei das Erzeugen der Parametertabelle für jeden Teilprozess umfasst:
- Auswählen (S21a) der historischen niO-Kurven aus den historischen Kurven; und
- für jede ausgewählte historische niO-Kurve und in Abhängigkeit von der Art des Teilprozesses:
- Einteilen (S21b) der historischen niO-Kurve in eine Anzahl von Abschnitten oder in eine Anzahl von Quadranten;
- Ermitteln (S21c) einer Anzahl von Parameterwerten für jeden Abschnitt / jeden Quadranten, wobei die für die Art des Teilprozesses relevanten Parameter in einer Konfigurationstabelle hinterlegt sind;
- Durchführen (S21d) eines Zuordnungsschrittes, in dem der historischen niO-Kurve ein Fehlerbild zugeordnet wird, wobei das Fehlerbild ausgewählt wird aus einer Menge von für die Art des Teilprozesses relevanten Fehlerbildern, die in der Konfigurationstabelle hinterlegt sind, und wobei ein Fehlerbild vorzugsweise mehreren historischen niO-Kurven zugeordnet wird.

4. Verfahren nach dem vorhergehenden Anspruch, wobei das Erzeugen der Parametertabelle nach dem Zuordnen der Fehlerbilder zu den historischen niO-Kurven weiter umfasst:
- für jedes Fehlerbild, Ermitteln (S22a) einer charakteristischen Verteilung für die zu dem jeweiligen Fehlerbild gehörenden Parameter (Parameter-Populationen);
- aus allen Fehlerbildern, Ermitteln (S22b) jener Fehlerbilder, die anhand einer einzigen Parameter-Population eineindeutig bestimmbar sind, wobei sich diese eine Parameter-Population mit keiner weiteren Parameter-Population der Fehlerbilder überlappt; und
- Einfügen (22c) der ermittelten eineindeutig bestimmbaren Fehlerbilder in die Parametertabelle, wobei nur jene Werte der Parameter-Population, mit der das Fehlerbild eineindeutig bestimmbar ist, für das jeweilige Fehlerbild als Merkmal in der Parametertabelle gespeichert werden.

5. Verfahren nach dem vorhergehenden Anspruch, wobei für jene Fehlerbilder, die nicht anhand einer einzigen Parameter-Population eineindeutig bestimmbar sind, folgende Schritte durchgeführt werden:
i) Verkleinern (S23a) der Intervall-Längen der Parameter-Populationen um einen vorbestimmten relativen oder absoluten Wert;
ii) Ermitteln (S23b) jener Fehlerbilder, die anhand einer Parameter-Population mit verkleinerten Intervall-Längen eineindeutig bestimmbar sind und Einfügen der ermittelten eineindeutig bestimmbaren Fehlerbilder am Ende der Parametertabelle, wobei die Werte der Parameter-Populationen mit den ursprünglichen Intervall-Längen als Merkmale in der Parametertabelle gespeichert werden; und
iii) Prüfen, ob noch Fehlerbilder vorhanden sind, die nicht in die Parametertabelle eingefügt wurden, und falls diese Prüfung positiv ist, Fortfahren mit dem Schritt i), solange, bis alle Fehlerbilder in die Parametertabelle eingefügt wurden.

6. Verfahren nach einem der beiden vorhergehenden Ansprüche, wobei die in der Parametertabelle gespeicherten Merkmale vor dem Speichern um einen vorbestimmten relativen oder absoluten Wert angepasst werden, insbesondere die Intervallgrenzen um einen vorbestimmten relativen Wert vergrößert werden.

7. Verfahren nach einem der beiden vorhergehenden Ansprüche, wobei nach dem Einfügen aller Fehlerbilder in die Parametertabelle ein Überprüfungsschritt (S24) durchgeführt wird, wobei der Überprüfungsschritt umfasst:
i) für jede historische niO-Kurve, auf dessen Basis die Parametertabelle erzeugt wurde, Ermitteln (S24a) eines dazugehörigen Fehlerbildes auf Basis der Parametertabelle, indem jenes Fehlerbild ausgewählt wird, dessen Merkmale in der Parametertabelle mit den Merkmalen der historischen niO-Kurve übereinstimmen, wobei die in der Parametertabelle gespeicherten Fehlerbilder in aufsteigender Reihenfolge mit den Merkmalen der historischen niO-Kurve verglichen werden und wobei der Vergleich beendet wird, sobald ein Fehlerbild ermittelt wurde;
ii) für jede historische niO-Kurve aus dem Schritt i), Überprüfen (S24b), ob das ermittelte Fehlerbild mit dem der historischen niO-Kurve in dem Zuordnungsschritt zugeordneten Fehlerbild übereinstimmt; und
iii) wenn für ein Fehlerbild in dem Schritt ii) eine bestimmte Anzahl von ermittelten Fehlerbildern nicht mit den zugeordneten Fehlerbildern übereinstimmt,
- Speichern der Anzahl zu dem Fehlerbild in der Parametertabelle;
- Erzeugen zumindest eines zusätzlichen Merkmals und Speichern des zusätzlichen Merkmals zusammen mit den Merkmalen des Fehlerbildes als neues Fehlerbild in der Parametertabelle; und
- Ausführen der Schritte gemäß Anspruch 4 für jene Fehlerbilder, die das zumindest eine zusätzliche Merkmal aufweisen.

8. Verfahren nach dem vorhergehenden Anspruch, wobei für Fehlerbilder, die auch mit dem zusätzlichen Merkmal nicht eineindeutig bestimmbar sind, eine binär logistische Regression durchgeführt wird und wobei für diese Fehlerbilder die Formel der binär logistischen Regression zu dem Fehlerbild in der Parametertabelle gespeichert wird und wobei anschließend der Überprüfungsschritt wiederholt wird.

9. Verfahren nach dem vorhergehenden Anspruch, wobei in der Parametertabelle jene Fehlerbilder gekennzeichnet werden, zu denen in dem Überprüfungsschritt die jeweils kleinste Anzahl gespeichert wurde.

10. Verfahren nach einem der vorhergehenden Ansprüche, wobei bei dem vorbestimmten Übereinstimmungsgrad jedes Ist-Merkmal und das entsprechende Merkmal des Fehlerbildes ein vorbestimmtes Übereinstimmungskriterium erfüllen.

## Claims

1. Method for monitoring at least one process, wherein the at least one process comprises a manufacturing process and a product validation process/product validation, and for identifying fault patterns of faults occurring in the at least one process using a computer system which has a memory device and an interface for receiving sensor data, wherein a parameter table having characteristic fault patterns is generated for a number of partial processes of the at least one process, wherein the partial processes comprise process steps of the manufacturing process and product validation steps of the product validation process/product validation, wherein the parameter table is stored in the memory device, wherein the parameter table is generated based on historical sensor data, wherein the historical sensor data are provided by sensors, wherein the sensors are associated with a manufacturing plant, a tool, a test unit and/or a product validation device, wherein the historical sensor data are stored in the memory device, wherein the historical sensor data describe a number of historical curves which have at least two dimensions and are each assigned to a partial process, and wherein the historical curves for each partial process comprise historical OK curves (okay) and historical NOK curves (not okay), wherein the historical NOK curves represent faulty partial processes, wherein, after the parameter table has been generated, the process is monitored online, i.e. during operation and preferably in real time, and the following steps are performed:
a) collecting sensor data, in which fault patterns are to be determined, via the interface, which data are provided by sensors during a partial process, wherein the collected sensor data describe at least one curve which has at least two dimensions, and wherein the collected sensor data are assigned to the partial process;
b) comparing the collected sensor data to characteristic fault patterns stored in the parameter table for this partial process, wherein, for the comparison, actual characteristics are extracted from the collected sensor data corresponding to the characteristics that describe the characteristic fault patterns of this partial process, and said actual characteristics are compared with the characteristics in the parameter table according to a comparison rule; and
c) selecting the fault pattern from the parameter table, the characteristics of which match the actual characteristics to a predetermined degree of matching,
wherein, after step c), at least one fault cause assigned to the fault pattern and/or at least one fault elimination measure assigned to the fault pattern are selected for the selected fault pattern, wherein the fault causes and/or the fault elimination measures and the assignment to the relevant fault pattern are stored in a table.

2. Method according to the preceding claim, wherein
- the historical curves comprise historical process curves and historical product validation curves, the historical OK curves comprise historical OK process curves and historical OK product validation curves, and the historical NOK curves comprise historical NOK process curves and historical NOK product validation curves, and
- the faulty partial processes comprise faulty process steps and faulty products.

3. Method according to either of the preceding claims, wherein generating the parameter table for each partial process comprises:
- selecting (S21a) the historical NOK curves from the historical curves; and
- for each selected historical NOK curve, and depending on the type of partial process:
- dividing (S21b) the historical NOK curve into a number of portions or into a number of quadrants;
- determining (S21c) a number of parameter values for each portion/each quadrant, wherein the parameters relevant to the type of partial process are stored in a configuration table;
- performing (S21d) an assigning step in which a fault pattern is assigned to the historical NOK curve, wherein the fault pattern is selected from a set of fault patterns relevant to the type of the partial process stored in the configuration table, and wherein a fault pattern is preferably assigned to a plurality of historical NOK curves.

4. Method according to the preceding claim, wherein generating the parameter table after assigning the fault patterns to the historical NOK curves further comprises:
- determining (S22a), for each fault pattern, a characteristic distribution for the parameters belonging to the relevant fault pattern (parameter populations);
- determining (S22b), from all fault patterns, the fault patterns that are unambiguously identifiable from a single parameter population, wherein this one parameter population does not overlap with any other parameter population of the fault patterns; and
- inserting (22c) the determined unambiguously identifiable fault patterns into the parameter table, wherein only the values of the parameter population with which the fault pattern is unambiguously identifiable are stored as a characteristic in the parameter table for the relevant fault pattern.

5. Method according to the preceding claim, wherein, for the fault patterns that are not unambiguously identifiable from a single parameter population, the following steps are performed:
i) reducing (S23a) the interval lengths of the parameter populations by a predetermined relative or absolute value;
ii) determining (S23b) the fault patterns that are unambiguously identifiable from a parameter population that has reduced interval lengths, and inserting the determined unambiguously identifiable fault patterns at the end of the parameter table, wherein the values of the parameter populations that have the original interval lengths as characteristics are stored in the parameter table; and
iii) verifying whether there are still fault patterns that have not been inserted into the parameter table, and, if this test is positive, continuing with step i) until all fault patterns have been inserted into the parameter table.

6. Method according to either of the two preceding claims, wherein the characteristics stored in the parameter table are adjusted before storage by a predetermined relative or absolute value, in particular the interval limits are increased by a predetermined relative value.

7. Method according to either of the two preceding claims, wherein, after inserting all fault patterns into the parameter table, a verification step (S24) is performed, wherein the verification step comprises:
i) determining (S24a), for each historical NOK curve on the basis of which the parameter table was generated, an associated fault pattern based on the parameter table by selecting the fault pattern that has the characteristics in the parameter table that match the characteristics of the historical NOK curve, wherein the fault patterns stored in the parameter table are compared in ascending order to the characteristics of the historical NOK curve, and wherein the comparison is terminated once a fault pattern has been determined;
ii) verifying (S24b), for each historical NOK curve from step i), whether the determined fault pattern matches the fault pattern assigned to the historical NOK curve in the assigning step; and
iii) if, for a fault pattern in step ii), a certain number of determined fault patterns do not match the assigned fault patterns,
- storing the number to the fault pattern in the parameter table;
- generating at least one additional characteristic and storing the additional characteristic, together with the characteristics of the fault pattern, as a new fault pattern in the parameter table; and
- carrying out the steps according to claim 4 for the fault patterns that have the at least one additional characteristic.

8. Method according to the preceding claim, wherein a binary logistic regression is performed for fault patterns that are not unambiguously identifiable with the additional characteristic, and wherein, for these fault patterns, the formula of the binary logistic regression is stored to the fault pattern in the parameter table, and wherein the verification step is subsequently repeated.

9. Method according to the preceding claim, wherein, in the parameter table, the fault patterns are marked for which the smallest relevant number was stored in the verification step.

10. Method according to any of the preceding claims, wherein at the predetermined degree of matching, each actual characteristic and the corresponding characteristic of the fault pattern satisfy a predetermined matching criterion.

## Revendications

1. Procédé pour la surveillance d'au moins un processus, dans lequel l'au moins un processus comprend un processus de fabrication et un processus de validation de produit/une validation de produit, et pour la détermination d'images d'erreurs d'erreurs apparaissant dans l'au moins un processus avec un système informatique comportant un dispositif de mémorisation et une interface pour la réception de données de capteurs, dans lequel, pour un certain nombre de sous-processus de l'au moins un processus, dans lequel les sous-processus comprennent des étapes de processus du processus de fabrication et des étapes de validation de produit du processus de validation de produit/de la validation de produit, un tableau de paramètres comportant des images d'erreurs caractéristiques est généré, dans lequel le tableau de paramètres est mémorisé dans le dispositif de mémorisation, dans lequel la génération du tableau de paramètres est effectuée sur la base de données de capteurs historiques, dans lequel les données de capteurs historiques sont fournies par des capteurs, dans lequel les capteurs sont associés à une installation de fabrication, à un outil, à un appareil de vérification et/ou à un dispositif de validation de produit, dans lequel les données de capteurs historiques sont stockées dans le dispositif de mémorisation, dans lequel les données de capteurs historiques décrivent un certain nombre de courbes historiques qui présentent au moins deux dimensions et sont respectivement associées à un sous-processus, et dans lequel les courbes historiques comprennent, pour chaque sous-processus, des courbes iO (en ordre) historiques et des courbes niO (non en ordre) historiques, dans lequel les courbes niO historiques représentent des sous-processus contenant des erreurs, dans lequel, après la génération du tableau de paramètres, le processus est surveillé en ligne, c'est-à-dire que pendant le fonctionnement et de préférence en temps réel, et les étapes suivantes sont exécutées :
a) collecte de données de capteurs, dans lesquelles des images d'erreurs doivent être définies, par l'intermédiaire de l'interface, lesquelles images d'erreurs sont fournies par des capteurs pendant un sous-processus, dans lequel les données de capteurs collectées décrivent au moins une courbe qui présente au moins deux dimensions, et dans lequel les données de capteurs collectées sont associées au sous-processus ;
b) comparaison des données de capteurs collectées avec des images d'erreurs caractéristiques enregistrées dans le tableau de paramètres pour ledit sous-processus, dans lequel, pour la comparaison des données de capteurs collectées en fonction des caractéristiques qui décrivent les images d'erreurs caractéristiques dudit sous-processus, des caractéristiques réelles sont extraites, lesquelles sont comparées avec les caractéristiques dans le tableau de paramètres selon une règle de comparaison ; et
c) sélection, dans le tableau de paramètres, de l'image d'erreur dont les caractéristiques présentent un degré de concordance prédéterminé avec les caractéristiques réelles,
dans lequel au moins une cause d'erreur associée à l'image d'erreur et/ou au moins une mesure d'élimination d'erreur associée à l'image d'erreur sont sélectionnées après l'étape c) pour l'image d'erreur sélectionnée, dans lequel les causes d'erreur et/ou les mesures d'élimination d'erreur et l'association à l'image d'erreur respective sont mémorisées dans un tableau.

2. Procédé selon la revendication précédente, dans lequel
- les courbes historiques comprennent des courbes de processus historiques et des courbes de validation de produit historiques, les courbes iO historiques comprennent des courbes de processus iO historiques et des courbes de validation de produit iO historiques, et les courbes niO historiques comprennent des courbes de processus niO historiques et des courbes de validation de produit niO historiques, et
- les sous-processus contenant des erreurs comprennent des étapes de processus contenant des erreurs et des produits contenant des erreurs.

3. Procédé selon l'une des revendications précédentes, dans lequel la génération du tableau de paramètres comprend pour chaque sous-processus :
- la sélection (S21a) des courbes niO historiques parmi les courbes historiques ; et
- pour chaque courbe niO historique sélectionnée et en fonction du type de sous-processus :
- la division (S21b) de la courbe niO historique en un certain nombre de sections ou en un certain nombre de quadrants ;
- la définition (S21c) d'un certain nombre de valeurs de paramètres pour chaque section/chaque quadrant, dans lequel les paramètres pertinents pour le type de sous-processus sont enregistrés dans un tableau de configuration ;
- l'exécution (S21d) d'une étape d'association lors de laquelle une image d'erreur est associée à la courbe niO historique, dans lequel l'image d'erreur est sélectionnée parmi une quantité d'images d'erreurs pertinentes pour le type de sous-processus, lesquelles sont enregistrées dans le tableau de configuration, et dans lequel une image d'erreur est de préférence associée à plusieurs courbes niO historiques.

4. Procédé selon la revendication précédente, dans lequel la génération du tableau de paramètres comprend en outre, après l'association des images d'erreurs aux courbes niO historiques :
- pour chaque image d'erreur, la définition (S22a) d'une distribution caractéristique pour les paramètres appartenant à l'image d'erreur respective (populations de paramètres) ;
- à partir de toutes les images d'erreurs, la définition (S22b) des images d'erreurs qui peuvent être déterminées de manière univoque à l'aide d'une seule population de paramètres, dans lequel ladite population de paramètres ne chevauche aucune autre population de paramètres des images d'erreurs ; et
- l'insertion (22c) des images d'erreurs pouvant être déterminées de manière univoque définies dans le tableau de paramètres, dans lequel seules les valeurs de la population de paramètres avec lesquelles l'image d'erreur peut être déterminée de manière univoque sont mémorisées pour l'image d'erreur respective en tant que caractéristique dans le tableau de paramètres.

5. Procédé selon la revendication précédente, dans lequel les étapes suivantes sont exécutées pour les images d'erreurs ne pouvant pas être déterminées de manière univoque à l'aide d'une seule population de paramètres :
i) réduction (S23a) des longueurs d'intervalle des populations de paramètres d'une valeur relative ou absolue prédéterminée ;
ii) définition (S23b) des images d'erreurs qui peuvent être déterminées de manière univoque à l'aide d'une population de paramètres avec des longueurs d'intervalle réduites et insertion des images d'erreurs pouvant être déterminées de manière univoque définies à la fin du tableau de paramètres, dans lequel les valeurs des populations de paramètres avec les longueurs d'intervalle initiales sont mémorisées en tant que caractéristiques dans le tableau de paramètres ; et
iii) vérification pour savoir s'il reste des images d'erreurs qui n'ont pas été insérées dans le tableau de paramètres et, si ladite vérification est positive, continuation avec l'étape i) jusqu'à ce que toutes les images d'erreurs aient été insérées dans le tableau de paramètres.

6. Procédé selon l'une des deux revendications précédentes, dans lequel les caractéristiques mémorisées dans le tableau de paramètres sont adaptées d'une valeur relative ou absolue prédéterminée avant la mémorisation, en particulier les limites d'intervalle sont augmentées d'une valeur relative prédéterminée.

7. Procédé selon l'une des deux revendications précédentes, dans lequel, après l'insertion de toutes les images d'erreurs dans le tableau de paramètres, une étape de vérification (S24) est exécutée, dans lequel l'étape de vérification comprend :
i) pour chaque courbe niO historique sur la base de laquelle le tableau de paramètres a été généré, la définition (S24a) d'une image d'erreur correspondante sur la base du tableau de paramètres en sélectionnant l'image d'erreur dont les caractéristiques dans le tableau de paramètres concordent avec caractéristiques de la courbe niO historique, dans lequel les images d'erreurs mémorisées dans le tableau de paramètres sont comparées dans l'ordre croissant avec les caractéristiques de la courbe niO historique et dans lequel la comparaison est terminée dès qu'une image d'erreur a été définie ;
ii) pour chaque courbe niO historique de l'étape i), le fait de vérifier (S24b) si l'image d'erreur définie concorde avec l'image d'erreur associée à la courbe niO historique dans l'étape d'association ; et
iii) si, pour une image d'erreur à l'étape ii), un nombre déterminé d'images d'erreurs définies ne concordent pas avec les images d'erreurs associées,
- la mémorisation du nombre correspondant à l'image d'erreur dans le tableau de paramètres ;
- la génération d'au moins une caractéristique supplémentaire et la mémorisation de la caractéristique supplémentaire conjointement avec les caractéristiques de l'image d'erreur en tant que nouvelle image d'erreur dans le tableau de paramètres ; et
- la réalisation des étapes conformément à la revendication 4 pour les images d'erreurs qui présentent l'au moins une caractéristique supplémentaire.

8. Procédé selon la revendication précédente, dans lequel une régression logistique binaire est exécutée pour des images d'erreurs qui ne peuvent pas être déterminées de manière univoque même avec la caractéristique supplémentaire, et dans lequel, pour lesdites images d'erreurs, la formule de la régression logistique binaire pour l'image d'erreur est mémorisée dans le tableau de paramètres, et dans lequel l'étape de vérification est ensuite répétée.

9. Procédé selon la revendication précédente, dans lequel sont identifiées dans le tableau de paramètres les images d'erreurs pour lesquelles le plus petit nombre respectif a été mémorisé lors de l'étape de vérification.

10. Procédé selon l'une des revendications précédentes, dans lequel, au niveau de concordance prédéterminé, chaque caractéristique réelle et la caractéristique correspondante de l'image d'erreur satisfont à un critère de concordance prédéterminé.
